# EUROPEAN PATENT APPLICATION

(11) **EP 4 793 536 A1**
(43) Date of publication of application: **19.08.2026**
(21) Application number: 25157918.1
(22) Date of filing: 14.02.2025
(51) Int. Cl.: F17C 5/00, F17C 5/06

(54) **CONTROLLING TEMPERATURE OF A HYDROGEN STORAGE CONTAINER IN A HYDROGEN-FUELED VEHICLE**

(71) Applicant: Volvo Truck Corporation, 405 08 Göteborg (SE)
(72) Inventor: ANDERSSON, Arne, 435 42 Mölnlycke (SE); DESAI, Parthav, 417 28 Göteborg (SE); BACKEGÅRDH, Erik, 443 73 Gråbo (SE)
(74) Representative: Valea AB

(57) **Abstract**

A control system and a method for controlling a hydrogen-fueled vehicle comprising a fuel storage container for storing hydrogen fuel to be supplied to a power system and a cooling system for cooling at least the fuel storage container. The method comprises obtaining an indication indicating that the fuel storage container is to be refilled with hydrogen fuel at a refueling station at a future time point, determine a predicted state of the container at the future time point, determine a target state of the container for refilling the fuel storage container with the hydrogen fuel, and, responsive to determining that the container will not reach the target state when the vehicle is operated under at least one current and/or predicted operating condition, instruct at least portions of the vehicle to operate at at least one modified operating condition such that the fuel storage container assumes the target state at or in advance of the future time point.

## Description

### TECHNICAL FIELD

The disclosure relates generally to controlling a temperature of a fuel storage container in a hydrogen-fueled vehicle, including in preparation for refueling of the vehicle. It further relates to a control system, the hydrogen vehicle, a computer program product, and a tangible non-transitory computer-readable storage medium.

The disclosure can be applied in heavy-duty vehicles, such as trucks, buses, and construction equipment. Although the disclosure may be described with respect to a particular vehicle, the disclosure is not restricted to any particular vehicle.

### BACKGROUND

Vehicles, such as e.g., fuel cell electric vehicles (FCEVs), hydrogen internal combustion engine (H₂-ECE) vehicles, and other types of vehicles may use hydrogen gas as a fuel. The hydrogen fuel is typically stored in one or more fuel storage containers or tanks onboard the vehicle. The vehicle can be refueled at a refueling station where the tank of the vehicle can be refilled with hydrogen gas. During the refueling process, the inverse Joule-Thomson effect occurs when high-pressure hydrogen gas is expanded and, as a result, a temperature of the hydrogen gas rises. At the same time, due to its structural properties, the tank can only withstand certain temperatures. Thus, if the temperature of the tank becomes excessively high during the tank refueling at the refueling station, the refueling process may need to be stopped prematurely. The refueling process may thus be interrupted one or more times, which slows down the refueling process. Although their deployment is increasing, hydrogen refueling stations may be a scarce resource and a speed of refueling may be a limiting factor in refueling multiple hydrogen vehicles.

Accordingly, there is a need in improved approaches for controlling a hydrogen refueling process of a hydrogen-fueled vehicle, in a manner that allows increasing a speed of the refueling process and at the same time not compromising structural integrity of the hydrogen storage container.

### SUMMARY

In an aspect, a hydrogen-fueled vehicle is provided that comprises a power system, a fuel storage container that is configured to store hydrogen fuel to be supplied to the power system, a cooling system configured to cool at least the fuel storage container, and a control system. The control system comprises a processing circuitry that is configured to obtain an indication indicating that the fuel storage container is to be refilled with hydrogen fuel at a refueling station at a future time point; determine a predicted state of the fuel storage container at the future time point using at least one current and/or predicted operating condition of the vehicle, the predicted state comprising at least a predicted temperature inside the fuel storage container at the future time point; determine a target state of the fuel storage container for refilling the fuel storage container with the hydrogen fuel, the target state comprising at least a target temperature inside the fuel storage container at the future time point; and, responsive to determining, using the predicted state and the target state, that the fuel storage container will not reach the target state when the vehicle is operated under the at least one current and/or predicted operating condition, instruct at least portions of the vehicle to operate at at least one modified operating condition such that the fuel storage container assumes the target state at or in advance of the future time point.

The technical benefits may include improved safety, durability, and lifetime of the fuel storage container due to at least reducing a temperature inside the fuel storage container or tank. Another advantage is making it possible to refuel the hydrogen-fueled vehicle, i.e. refilling the fuel storage container with hydrogen gas or fuel, within a shorter time period due to eliminating or reducing the risk of overheating the hydrogen gas as it enters the fuel storage container during the refueling process at the refueling station. The refueling speed may be increased due to the fact that a number of times that the refueling needs to stop - due to the increased temperature of the hydrogen gas - is reduced, or in some cases the refueling may be performed without the interruptions.

In some examples, instructing the at least portions of the vehicle to operate at the at least one modified operating condition may comprise initiating a refueling temperature control process in advance of the future time point, the refueling temperature control process comprising instructing at least the cooling system to cool the fuel storage container.

The technical benefits include eliminating or reducing the risk of overheating the hydrogen gas, which improves the safety of the fuel storage container. For example, a risk of hydrogen leaking from the inside of the fuel storage container is reduced or eliminated. In some examples, a liner lining the interior of the fuel storage container and having the ability to withstand high pressure, by which may be temperature sensitive, is thereby protected from potential damage and thus from increasing its permeability to hydrogen.

In some examples, the predicted state of the fuel storage container may be determined based on one or more of a current temperature inside the fuel storage container, a current pressure inside the fuel storage container, a distance to the refueling station, and a rate of usage of the hydrogen fuel by the hydrogen-fueled vehicle before the hydrogen-fueled vehicle reaches the refueling station.

In some examples, the target state of the fuel storage container at the future time point may be determined based on one or more refueling parameters comprising one or more of an amount of the hydrogen fuel to be received by the fuel storage container at the refueling station, a target rate of receiving the hydrogen fuel by the fuel storage container at the refueling station, and a temperature of the hydrogen fuel at the refueling station.

In some examples, the processing circuitry of the control system may be configured to obtain at least one of the one or more refueling parameters from the refueling station and/or to provide to the refueling station information on at least the target state of the fuel storage container for refilling the fuel storage container with the hydrogen fuel.

In some examples, the refueling temperature control process may comprise operating at least the portions of the vehicle at the at least one modified operating condition such that the fuel storage container maintains the target state beyond the future time point.

In some examples, the one modified operating condition may comprise a cooling power required by the cooling system for the refueling temperature control.

In some examples, the processing circuitry of the control system may be configured to inform the refueling station about the refueling temperature control process.

In some examples, the processing circuitry of the control system may be configured to enable the vehicle to receive the hydrogen fuel from the refueling station at a hydrogen fuel temperature that is above a threshold hydrogen fuel temperature.

In an aspect, a method for controlling a hydrogen-fueled vehicle is provided, the hydrogen-fueled vehicle comprising a power system, a fuel storage container and a cooling system, wherein the cooling system is configured to cool at least the fuel storage container, and the fuel storage container is configured to store hydrogen fuel to be supplied to the power system. The method comprises obtaining an indication indicating that the fuel storage container is to be refilled with hydrogen fuel at a refueling station at a future time point; determining a predicted state of the fuel storage container at the future time point using at least one current and/or predicted operating condition of the vehicle, the predicted state comprising at least a predicted temperature inside the fuel storage container at the future time point; determining a target state of the fuel storage container for refilling the fuel storage container with the hydrogen fuel, the target state comprising at least a target temperature inside the fuel storage container at the future time point; and, responsive to determining, using the predicted state and the target state, that the fuel storage container will not reach the target state when the vehicle is operated under the at least one current and/or predicted operating condition, operating at least portions of the vehicle at at least one modified operating condition such that the fuel storage container assumes the target state at or in advance of the future time point.

The technical benefits may include improved safety, durability, and lifetime of the fuel storage container due to at least reducing a temperature inside the fuel storage container or tank. Another advantage is making it possible to refuel the hydrogen-fueled vehicle, i.e. refilling the fuel storage container with hydrogen gas or fuel, within a shorter time period due to eliminating or reducing the risk of overheating the hydrogen gas as it enters the fuel storage container during the refueling process at the refueling station. The refueling speed may be increased due to the fact that a number of times that the refueling needs to stop - due to the increased temperature of the hydrogen gas - is reduced, or in some cases the refueling may be performed without the interruptions.

In some examples, operating at least portions of the vehicle at the at least one modified operating condition may comprise initiating a refueling temperature control process in advance of the future time point, the refueling temperature control process comprising operating at least the cooling system for cooling the fuel storage container.

In some examples, the predicted state of the fuel storage container may be determined based on one or more of a current temperature inside the fuel storage container, a current pressure inside the fuel storage container, a distance to the refueling station, and a rate of usage of the hydrogen fuel by the vehicle before the vehicle reaches the refueling station.

In some examples, the target state of the fuel storage container at the future time point may be determined based on one or more refueling parameters comprising one or more of an amount of the hydrogen fuel to be received by the fuel storage container at the refueling station, a target rate of receiving the hydrogen fuel by the fuel storage container at the refueling station, and a temperature of the hydrogen fuel at the refueling station.

In some examples, the method comprises obtaining at least one of the one or more refueling parameters from the refueling station and/or providing to the refueling station information on at least the target state of the fuel storage container for refilling the fuel storage container with the hydrogen fuel.

In some examples, the refueling temperature control process may comprise operating at least the portions of the vehicle at the at least one modified operating condition such that the fuel storage container maintains the target state beyond the future point.

In some examples, the method comprises enabling the vehicle to receive the hydrogen fuel from the refueling station at a hydrogen fuel temperature that is above a threshold hydrogen fuel temperature.

In some examples, operating at least portions of the vehicle at the at least one modified operating condition may comprise continuing the refueling temperature control process after the fuel storage container has been refilled with the hydrogen fuel, to account for the hydrogen fuel received at the hydrogen fuel temperature that is above the threshold hydrogen fuel temperature.

In an aspect, a control system is provided that comprises processing circuitry configured to perform, at least in part, the method in accordance with examples of the present disclosure. The control system may be included in a hydrogen-fueled vehicle that comprises a power system, a fuel storage container that is configured to store hydrogen fuel to be supplied to the power system, a cooling system configured to cool at least the fuel storage container, and the control system.

The technical benefits of the control system may be the same or similar to those achieved by the method in accordance with any one or more examples of the present disclosure. Further, all embodiments of the method are applicable to and combinable with all embodiments of the control system according to the examples herein, and vice versa.

In an aspect, a computer program product is provided that comprises computer-executable instructions, which, when executed by processing circuitry, cause the processing circuitry to perform the method in accordance with examples of the present disclosure.

The technical benefits of the computer program may be the same or similar to those achieved by the method in accordance with any one or more examples of the present disclosure. Further, all embodiments of the method are applicable to and combinable with all embodiments of the computer program according to the examples herein, and vice versa.

According to an aspect of the disclosure, a tangible non-transitory computer-readable storage medium is provided. The tangible non-transitory computer-readable storage medium has stored thereon computer-executable instructions which, when executed by processing circuitry, cause the processing circuitry to perform the method in accordance with examples of the present disclosure.

The technical benefits of the computer-readable storage medium may be the same or similar to those achieved by the method in accordance with any one or more examples of the present disclosure. Further, all embodiments of the method are applicable to and combinable with all embodiments of the computer-readable storage medium according to the examples herein, and vice versa.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

With reference to the appended drawings, below follows a more detailed description of aspects of the disclosure cited as examples.
**FIG. 1** illustrates a side view of an example of a hydrogen-fueled vehicle in which a method in accordance with aspects of the present disclosure may be implemented.
**FIG. 2** illustrates an example of components of the hydrogen-fueled vehicle of FIG. 1, in accordance with an example.
**FIG. 3** illustrates an example of a cooling system configured to control a temperature inside of the fuel storage container, in accordance with an example.
**FIG. 4** illustrates an example of the fuel storage container of FIG. 3.
**FIG. 5** is a flow chart illustrating a method for controlling a hydrogen-fueled vehicle, in accordance with examples of the present disclosure.
**FIG. 6A** illustrates an example of a range of target temperature and pressure values inside the fuel storage container when the hydrogen-fueled vehicle reaches the refueling station, in accordance with an example.
**FIG. 6B** illustrates an example of a range of temperature and pressure values inside the fuel storage container at which at least portions of the hydrogen-fueled vehicle may be instructed to operate at at least one modified operating condition, in accordance with an example.
**FIG. 7** is a schematic diagram of a computer system for implementing examples in accordance with the present disclosure.

### DETAILED DESCRIPTION

The detailed description set forth below provides information and examples of the disclosed technology with sufficient detail to enable those skilled in the art to practice the disclosure.

A hydrogen-fueled vehicle comprises a power system and a fuel storage container that is configured to store hydrogen fuel to be supplied to the power system. A certain temperature inside the fuel storage container is required at a time of refilling or refueling. Thus, in some cases, when the temperature inside the fuel storage container exceeds certain limits or values, a tank refueling process may be interrupted or stopped prematurely, before the refilling is completed. Moreover, when the temperature inside the fuel storage container exceeds certain values, a structural integrity of the fuel storage container may be compromised and hydrogen may leak from the fuel storage container. A sealing liner inside the fuel storage container may be damaged if the temperature inside the fuel storage container exceeds certain values.

Accordingly, techniques for controlling a hydrogen-fueled vehicle are provided in accordance with aspects and examples of the present disclosure. The hydrogen-fueled vehicle comprises a power system, a cooling system, and a fuel storage container configured to store hydrogen fuel to be supplied to the power system. The cooling system or thermal management system is configured to cool at least the fuel storage container, and the cooling system may be configured to regulate temperatures of other components, systems, or devices of the vehicle.

A temperature inside the fuel storage container may be controlled before, during, and in some cases after the refueling of the fuel storage container. The temperature inside the fuel storage container may be proactively decreased to thereby allow refueling the fuel storage container and storing the hydrogen fuel in the fuel storage container in the improved manner. The control is performed such that safety of the fuel storage container and the vehicle is increased. Another advantage of the described approach is that a time of the refueling process may be decreased and no interruptions of the refueling process, which may otherwise occur due to the fuel storage container overheating.

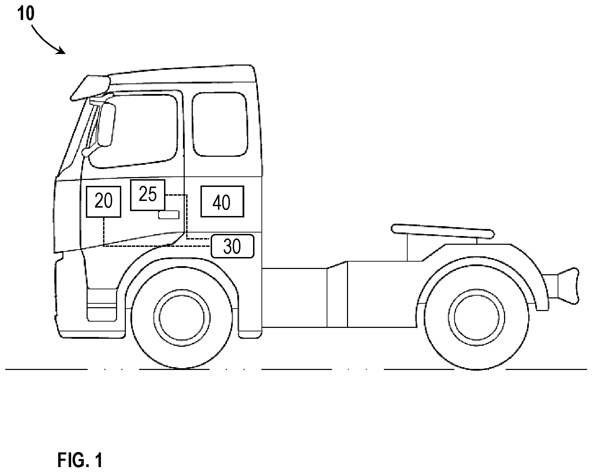

**FIG. 1** depicts a side view of a hydrogen-fueled vehicle 10 according to an example of the present disclosure. The hydrogen-fueled vehicle 10 is shown as a truck, such as a heavy-duty truck for towing one or more trailers. The hydrogen-fueled vehicle 10 may be a fuel cell electric vehicle (FCEV), a hydrogen internal combustion engine (H₂-ECE) vehicle, a hybrid vehicle comprising a fuel cell system, or any other type of a hydrogen-fueled vehicle comprising a fuel storage container for storing hydrogen gas. It should be appreciated that the present disclosure is not limited to any specific type of vehicle, and may be used for any other type of vehicle, such as a bus, construction equipment, e.g. a wheel loader or an excavator, a passenger car, an aircraft, and a marine vessel.

As shown schematically in FIG. 1, the hydrogen-fueled vehicle 10 comprises a power system 20, a cooling system 25, and a fuel storage container 30. The power system 20 may comprise one or more of a fuel cell system, a hydrogen internal combustion engine, and/or other components configured to use hydrogen as a fuel. The cooling system 25 is configured to cool at least the fuel storage container 30.

The fuel storage container 30, which may also be referred to as a tank, vessel, canister, cartridge or cylinder, is configured to store hydrogen in its gaseous form. It should be appreciated that the hydrogen-fueled vehicle 10 may comprise more than one fuel storage container 30, and that the description of the fuel storage container 30 and the method for cooling the fuel storage container 30 also applies to more than one fuel storage container 30.

In some examples, the fuel storage container 30 may be a Type IV tank, also referred to as a type 4 hydrogen tank, type IV hydrogen cylinder, or type 4 hydrogen cylinder. In some examples, the fuel storage container 30 may be a Type V tank, which may similarly be referred to in several alternative ways. Examples of the present disclosure may apply to any type of a fuel storage container for storing hydrogen fuel also referred to as a hydrogen gas.

The hydrogen-fueled vehicle 10 also comprises a controller or control unit or control system 40 according to an example of the present disclosure. The control system 40 may be a vehicle controller. The control system 40 may be configured to control the cooling system 25 and other components of the vehicle 10. In some examples, the functionality described herein as performed by the control system 40 may be performed by one or more control units or systems, such that the control system 40 may encompass more than one control unit or system.

The control system 40 is configured to control components of the hydrogen-fueled vehicle 10 by issuing control signals and by receiving status information relating to the components. The control system 40 may be configured to receive information from various sensors, including one or more of temperature sensors, pressure sensors, moisture sensors, hydrogen sensors, and other sensors included in or associated with the vehicle 10. For example, one or more temperature sensors and pressure sensors may be employed to measure a temperature inside the fuel storage container 30, and the control system 40 may obtain measurements acquired by the sensors.

The control system 40 may include and/or may be communicatively coupled to an internal database, an external database, or a combination thereof, to receive historical data related to driver's driving pattern, historical data on the vehicle operation e.g. locations traveled by the vehicle e.g. during assignments or mission performed by the vehicle, frequency and locations of stops, historical data on ambient conditions at locations traveled by the vehicle, etc. The control system 40 may be configured to receive data from a global positioning system (GPS). The hydrogen-fueled vehicle 10 may be equipped with a GPS device such as a GPS tracker, and the control system 40 may receive information related to a current location of the vehicle 10. The control system 40 may obtain information about traffic and other conditions related to the route traveled by the vehicle 10. The control system 40 may obtain data from various sources such as, e.g., one or more out of vehicle-to-everything (V2X) infrastructure, a vehicle-to-vehicle (V2V) infrastructure, a dedicated short range communication (DSRC), a vehicle controller area network (CAN), artificial intelligence (AI), Internet of Things (IoT), and combinations thereof. In some examples, the control system 40 may access data stored in a cloud storage, and may store data in the cloud storage.

The control system 40 may be an electronic control unit (ECU). The control system 40 may include a microprocessor, microcontroller, programmable digital signal processor or another programmable device. The control system 40 may comprise electronic circuits and connections as well as processing circuitry that is adapted and/or configured to execute a computer program such as computer-executable instructions, to cause the control system 40 to perform a method according to aspects of the present disclosure. The control system 40 can communicate with different parts or components of the vehicle 10 in order to provide the functions of the examples in accordance with aspects of the present disclosure. The processing circuitry may be a general purpose processor or a specific processor.

In some examples, the control system 40 may be denoted a computer. The control system 40 may be constituted by one or more separate sub-units, and the control system 40 may communicate by using wired and/or wireless communication technology.

The hydrogen-fueled vehicle 10 also comprises various other components not shown in FIG. 1.

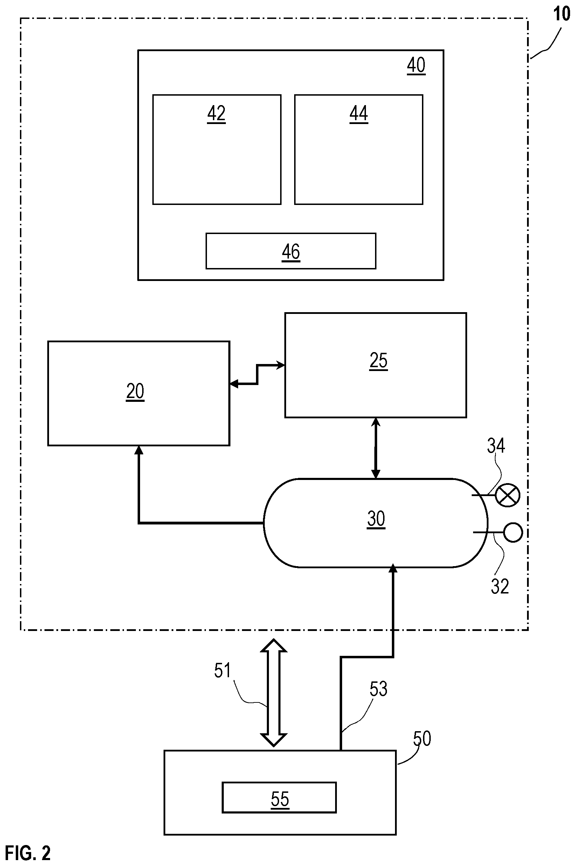

**FIG. 2** shows schematically an example of components of the hydrogen-fueled vehicle 10, such as the power system 20, the cooling system 25, and the fuel storage container 30. As shown in FIG. 2, the fuel storage container 30 may comprise at least one temperature sensor 32 configured to acquire measurements of a temperature inside the fuel storage container 30, and at least one pressure sensor 34 configured to acquire measurements of a pressure inside the fuel storage container 30. It should be noted that the sensors are shown schematically, and that the at least one temperature sensor 32 and the at least one pressure sensor 34 may be positioned inside the fuel storage container 30. The sensors 32, 34 are configured to provide acquired measurements to the outside of the fuel storage container 30, e.g., to the control system 40 and in some cases to other components external to the fuel storage container 30. The fuel storage container 30 may include and/or may be associated with one or more sensors for monitoring a fill level of the fuel storage container.

In examples herein, as also shown in FIG. 2, the control system 40 comprises processing circuitry 42 that is configured to execute computer-executable instructions that, when executed by the processing circuitry 42, perform a method in accordance with examples of the present disclosure. The control system 40 comprises memory 44 that is configured to store the computer-executable instructions and various data. In some implementations, the computer-executable instructions may be stored, at least in part, remotely e.g. in a remote memory. The memory 44 may acquire data from various internal and external sources including from one or more remote storage locations.

The control system 40 also comprises a hardware communication interface 46 configured to set up and maintain a wired or wireless connection with an interface of a component of the hydrogen-fueled vehicle 10 and/or with an interface of a device or system that is external to the hydrogen-fueled vehicle 10. Thus, the hardware communication interface 46 is configured to communicate with a refueling station 50 that is shown in FIG. 2. Communication between the hydrogen-fueled vehicle 10 and the refueling station 50 may be established during pre-conditioning, e.g., precooling of the fuel storage container 30 in anticipation of the refueling at the refueling station 50.

As shown schematically in FIG. 2 by an arrow 51, the vehicle 10 may communicate with the refueling station 50 via a wireless communications network. For example, the control system 40 of the vehicle 10 may be configured to communicate with the control system 55 of the refueling station 50. The control system 55 may be an ECU. The control system 55 may be implemented as a computer device comprising processing circuitry and memory storing computer-executable instructions configured to be executed by the processing circuitry to perform a process for controlling operation of the refueling station, including refueling of a hydrogen-fueled vehicle. In some examples, the wireless communications network may employ a short-range wireless technology.

In FIG. 2, an arrow 53 illustrates schematically that the hydrogen-fueled 10, more particularly, the vehicle tank or the fuel storage container 30, is configured to receive hydrogen gas fuel from the refueling station 50.

The hydrogen-fueled vehicle 10, e.g., via the hardware communication interface 46 of the control system 40, may provide to the refueling station 50 information on a state or condition of the fuel storage container 30. For example, the information may comprise a target state of the fuel storage container 30 for refilling the fuel storage container 30 with the hydrogen fuel, wherein the target state may comprise at least a target temperature inside the fuel storage container at a time point when the refilling of the fuel storage container 30 begins. The information on the target state of the fuel storage container 30 for refilling the fuel storage container 30 may also comprise a target pressure inside the fuel storage container at a time point when the refilling of the fuel storage container 30 begins. The hydrogen-fueled vehicle 10, e.g., the control system 40, may also provide to the refueling station 50 information on a current temperature and/or current pressure inside the fuel storage container 30, such as at any suitable time point. The hydrogen-fueled vehicle 10 may provide other information to the refueling station 50, e.g., on one or more of a distance of the vehicle 10 to the refueling station 50, a time remaining before the vehicle 10 is estimated to reach the refueling station 50, a rate of usage of the hydrogen fuel by the vehicle 10 before the vehicle 10 reaches the refueling station 50, an amount such as current amount of the hydrogen fuel in the fuel storage container 30, and other information.

The hydrogen-fueled vehicle 10 may also receive, e.g., via the hardware communication interface 46 of the control system 40, information from the refueling station 50. The information received from the refueling station 50 may comprise, e.g., a temperature of the hydrogen fuel at the refueling station 50, an amount of the hydrogen fuel to be received by the fuel storage container 30 at the refueling station 50, a target rate of receiving the hydrogen fuel by the fuel storage container 30 at the refueling station 50, and other information.

Various other information may be provided to the refueling station 50 by the hydrogen-fueled vehicle 10 and received by the hydrogen-fueled vehicle 10 from the refueling station 50. In some examples, the hydrogen-fueled vehicle 10 may communicate with other vehicles, e.g., when the hydrogen-fueled vehicle 10 belongs to a fleet of vehicles. For example, the vehicles may communicate regarding approaching the refueling station 50 and priority of access to the refueling station 50.

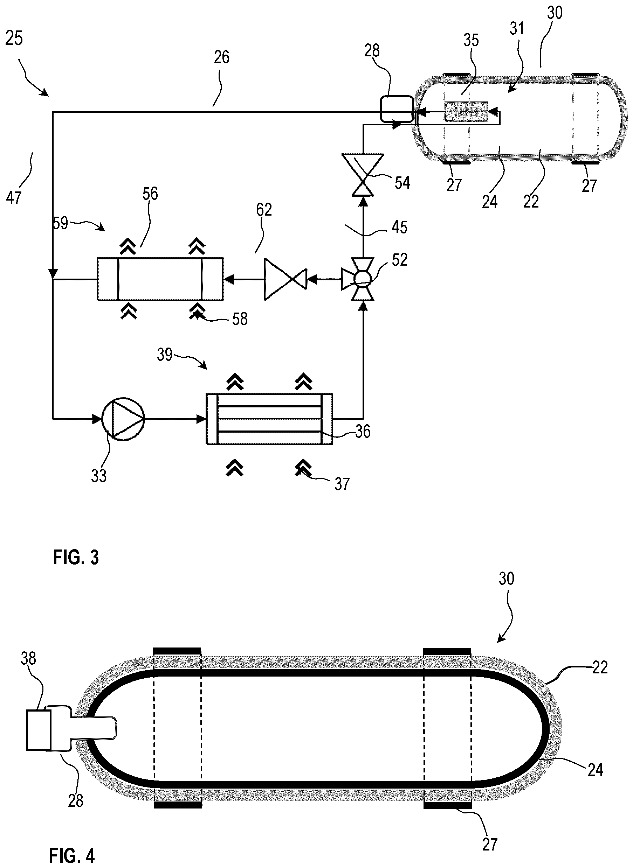

**FIG. 3** illustrates in more detail an example of the cooling system 25 configured to control the temperature inside the fuel storage container 30. In some examples, the cooling system 25 may be or may be part of an air conditioning system of the vehicle 10 for controlling a temperature of a cabin or cab of the vehicle 10. Thus, a part of a flow of a coolant in the air conditioning system may be directed or diverted to the fuel storage container 30, to control the temperature, e.g., to reduce the temperature, inside the fuel storage container 30.

In some examples, a part or branch of the air conditioning system configured to direct a portion of the coolant to the fuel storage container 30 may be positioned in side deflectors of a cabin of the vehicle 10.

In some examples, the cooling system 25 may be or may be part of a standalone system e.g. a cooling system.

As shown in FIG. 3, the cooling system 25 comprises a cooling conduit or circuit 26 configured to carry a flow of a coolant to and from the fuel storage container 30. The coolant may be a suitable gas or liquid. The cooling circuit 26 comprises a pump 33 configured to control a flow of the coolant into a condenser or capacitor 36. The capacitor 36 acquires ambient air, as shown by arrows 37, and outputs heated air, as shown by arrows 39. As it passes through the capacitor 36, the coolant becomes colder, such that the compressed coolant having a reduced temperature is output by the capacitor 36 and can be directed to one or both of an evaporator 56 and the fuel storage container 30.

In examples herein, the air conditioning system of the vehicle 10 may be modified to include certain components that allow selectively directing a portion of the coolant to the fuel storage container 30. In some examples, as mentioned above, the cooling system 25 may be a standalone system having the coolant circulating therein.

A fuel storage container cooling valve 52 may be positioned downstream of the capacitor 36 and is configured to selectively direct a portion of the flow of the coolant, circulating in the cooling circuit 26, towards the fuel storage container 30. The fuel storage container cooling valve 52 may be controlled using the method in accordance with the present disclosure. The fuel storage container cooling valve 52 may be a three-way valve, e.g., a redirection or directional control valve. In some examples, the fuel storage container cooling valve 52 may be a proportional valve.

A flow restrictor 54 may be positioned downstream of the fuel storage container cooling valve 52 and it is configured to reduce a pressure of the flow of the coolant.

The fuel storage container cooling valve 52 may be controlled to direct the flow of the coolant to the evaporator 56 that is configured to obtain an air from the cabin of the vehicle 10, as shown by arrows 58, and to output a cooler air to the cabin of the vehicle 10, as shown by arrows 59. A second flow restrictor 62 may be positioned downstream of the fuel storage container cooling valve 52 and upstream of the evaporator 56. As used herein, "downstream" refers to a direction in which the coolant moves within the cooling conduit or circuit 26. As used herein, "upstream" refers to a direction that is opposite to the direction in which the coolant moves within the cooling conduit or circuit 26.

The fuel storage container 30 may comprise an outer shell 22 and an inner layer 24 that lines the interior 31 of the fuel storage container 30. The outer shell 22 may be formed from e.g. a carbon fibre composite, or from other interwoven thermoplastic polymers. The inner layer 24 comprises a sealing liner that prevents the hydrogen gas from escaping the fuel storage container 30. The liner may be, e.g., a high-density polymer liner. The high-density polymer may be, e.g., high-density polyethylene or polyamide. The liner may be sensitive to high temperatures, such that the methods in accordance with examples of the present disclosure allow protecting the sealing integrity of the liner, thereby improving safety and durability of the fuel storage container, and thus extending a lifespan of the fuel storage container.

In some examples, the fuel storage container 30 may be a type IV tank in which the hydrogen gas is stored at high pressures, such as 700 bar. In some examples, the fuel storage container 30 may be a type IV tank in which the hydrogen gas is stored at pressures above 700 bar, e.g., up to 875 bar. The type IV tank is considered to be advantageous in vehicular applications due to its high storage density and light weight. At the same time, there is a risk of hydrogen permeation through the polymer liner.

The fuel storage container 30 may comprise or may be associated with one or more temperature sensors and one or more pressure sensors e.g. as shown in FIG. 2. The fuel storage container 30 may also comprise or may be associated with one or more sensors for monitoring a fill level of the fuel storage container 30. Also, there is piping for extraction and feeding of hydrogen.

It should be noted that, in some examples, the inner layer 24 may be not present, e.g., if the fuel storage container 30 is a type V tank. However, regardless of the specific structure of the fuel storage container, the aim of the techniques in accordance with examples of the present disclosure is to prevent hydrogen leaking from the fuel storage container due to overheating. Another benefit is the reduction of refueling speed.

As shown schematically in FIG. 3, the fuel storage container 30 comprises a fuel storage container valve 28 configured to control access to the interior 31 of the fuel storage container 30. Although this is not shown in FIG. 3, the fuel storage container 30 may be refilled with compressed hydrogen gas via the valve 28 which may be associated with e.g. a nozzle or another component. The fuel storage container 30 may be configured to be accessed to provide the compressed hydrogen gas to the power system of the vehicle via the valve 28. The valve 28 may be associated with one or more sensors configured to measure a temperature and pressure inside the fuel storage container 30. The valve 28 may comprise or may be associated with a thermal pressure relief device (TPRD) configured to release the hydrogen gas if overpressure builds up inside the fuel storage container 30.

As shown schematically in FIG. 3, the fuel storage container valve 28 is also configured to allow a coolant to flow in and out of the fuel storage container 30. In some examples, the valve 28 may comprise or may be associated with a cooling element 35 configured such that a portion of the cooling circuit 26 passes therethrough. The cooling element 35 allows reducing the temperature of the interior 31 of the fuel storage container 30.

The fuel storage container 30 may comprise one or more supporting elements 27 configured to keep the fuel storage container 30 in place in a location where it is positioned in the vehicle 10. The supporting elements 27 may be, e.g., straps, belts, cords or any other suitable elements. In some implementations, the supporting elements may not be present and the fuel storage container 30 may be retained in place using other types of features.

**FIG. 4****,** additionally illustrating the fuel storage container 30 of FIG. 3, shows that the valve 28 may be associated with or may comprise a valve evaporator 38 configured to provide additional cooling to the coolant passing through the fuel storage container 30.

As shown in FIG. 3, a forward line 45 of the cooling circuit 26 is configured to carry the coolant towards and through the fuel storage container 30, such that a part of the cooling circuit 26 is configured to pass the coolant through a portion of the interior of the fuel storage container 30, to thereby reduce the temperature inside the fuel storage container 30. A return line 47 of the cooling circuit 26 is configured to carry the coolant, which has been passed through the interior of the fuel storage container 30, away from the fuel storage container 30 and towards the pump 33. The coolant that has passed through the evaporator 56 is also directed towards the pump 33 via the return line 47.

It should be appreciated that the cooling system 25 may comprise various other components not shown in FIG. 3.

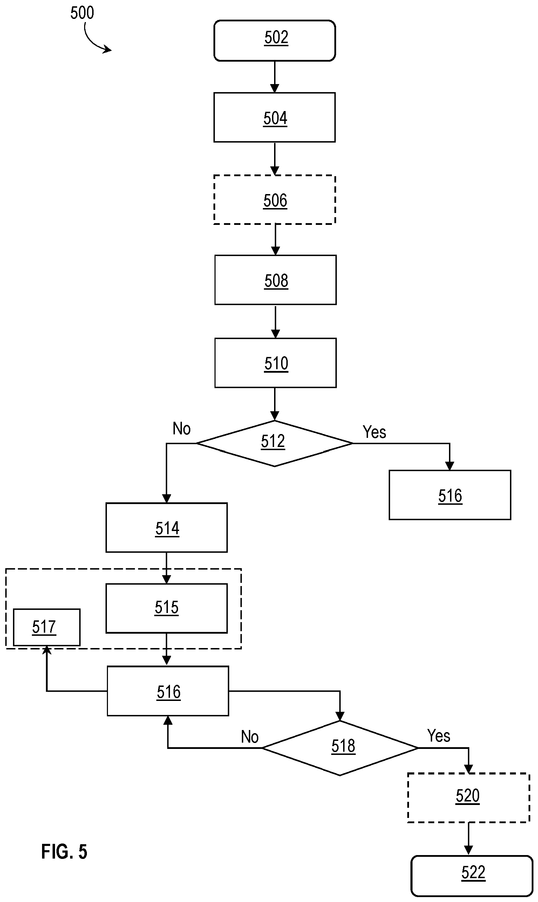

**FIG. 5** illustrates a method or process 500 for controlling a hydrogen-fueled vehicle, e.g., the hydrogen-fueled vehicle 10. The hydrogen-fueled vehicle 10 comprises a power system, a fuel storage container and a cooling system. The cooling system is configured to cool at least the fuel storage container, and the fuel storage container is configured to store hydrogen fuel to be supplied to the power system. The power system may be or may comprise a fuel cell system when the hydrogen-fueled vehicle is a fuel cell vehicle.

The method or process 500 may be performed by the control system 40 or by any other suitable control system or device which may be a computer system. The processing circuitry 42 of the control system 40 may perform the method of process 500. The processing at the depicted blocks of the method 500 may be performed in any suitable order which may deviate from the order shown in FIG. 5. Blocks with optional processing are shown using dotted lines.

At **block 502,** the process 500 may start at a suitable time, e.g., when the hydrogen-fueled vehicle 10 is traveling a route. The vehicle 10 may be assigned a task or a mission which may include the route assigned to the vehicle 10. The route may comprise a start point and an end or destination point. In some examples, the hydrogen-fueled vehicle 10 may be part of a fleet of vehicles, and the mission may be assigned to the vehicle 10 as part of the fleet.

At **block 504,** the control system may obtain an indication indicating that the fuel storage container is to be refilled with hydrogen fuel at a refueling station at a future time point. The future time point defines a point in time when the hydrogen-fueled vehicle 10 is positioned so that the vehicle's fuel storage container can be refilled with compressed hydrogen gas. The future time point may be the point in time when the vehicle 10 has reached the refueling station, has been positioned so as to be refueled, and established a physical contact with the refueling station for receiving the hydrogen gas to be dispensed by the refueling station.

The indication may be received, e.g., when the control system 40 determines that the hydrogen-fueled vehicle 10 is at a certain distance from the refueling station. The hydrogen-fueled vehicle 10 may have a GPS device, and a geographical location of the vehicle 10 may be determined using the GPS and/or another positioning system. Thus, the control system 40 may be aware, based on a current location of the vehicle, a speed of the vehicle, historical data on operation of the vehicle, and other features such as properties of the route, ambient conditions, etc., when the vehicle is expected to arrive to the refueling station, at a time point referred to as the future time point, for refilling the fuel storage container.

The indication may also be received in response to determining that the fuel storage container of the hydrogen-fueled vehicle 10 has a certain amount of hydrogen gas, e.g., below a certain threshold level such that a refill of the fuel storage container is required. In some examples, the route assigned to the vehicle may be modified to direct the vehicle to the refueling station when the amount of hydrogen gas in the fuel storage container is below the certain threshold level. One or more sensors for monitoring a fill level of the fuel storage container may be used to determine the amount of hydrogen gas in the fuel storage container.

In some examples, the route may be planned in accordance with hydrogen fuel usage by the vehicle and/or locations of refueling stations along the route.

In any case, the control system may determine that the fuel storage container is to be refilled with hydrogen fuel at the refueling station at the future time point, wherein the future time point may be known or predicted.

At optional **block 506,** the control system of the vehicle may establish a communication with the refueling station, e.g., via the hardware communication interface 46 shown in FIG. 2. The vehicle and the refueling station may exchange various information and the information may be used by the control system to make decisions regarding controlling the hydrogen-fueled vehicle, e.g., the cooling system of the vehicle, in preparation for the refueling process, during the refueling process, and in some cases also after the refueling process.

At **block 508,** the control system may determine a predicted state of the fuel storage container at the future time point using at least one current and/or predicted operating condition of the hydrogen-fueled vehicle. The predicted state of the fuel storage container comprises at least a predicted temperature inside the fuel storage container at the future time point. The predicted state of the fuel storage container may also comprise a predicted pressure inside the fuel storage container at the future time point. The predicted temperature and pressure values may comprise a range of respective values.

The predicted state of the fuel storage container indicates a state in which the fuel storage container is predicted or expected to be at the future time point. The current temperature and pressure inside the fuel storage container may be monitored, and the control system may determine or predict the temperature and pressure inside the fuel storage container at the future time point.

In some examples, the predicted state of the fuel storage container at the future time point may be determined based on one or more refueling parameters comprising one or more of an amount of the hydrogen fuel to be received by the fuel storage container at the refueling station, a target rate of receiving the hydrogen fuel by the fuel storage container at the refueling station, and a temperature of the hydrogen fuel at the refueling station.

In some examples, the predicted state of the fuel storage container may be determined based on the current and/or predicted operating conditions of the vehicle such as one or more of a current temperature inside the fuel storage container, a current pressure inside the fuel storage container, a distance to the refueling station, and a rate of usage of the hydrogen fuel by the vehicle before the vehicle reaches the refueling station. Other current and/or predicted operating conditions of the vehicle may be used to determine the predicted state of the fuel storage container at the future time point.

At **block 510,** the control system may determine a target state of the fuel storage container for refilling the fuel storage container with the hydrogen fuel, the target state comprising at least a target temperature inside the fuel storage container at the future time point. The target temperature inside the fuel storage container may comprise one or more temperature values or a range of values. The target state of the fuel storage container may also comprise a target pressure inside the fuel storage container at the future time point. The target pressure inside the fuel storage container comprises one or more pressure values or a range of values.

The target state of the fuel storage container is a state in which the fuel storage container is to be refilled at the refueling station in accordance with aspects and examples of the present disclosure. Thus, the target state of the fuel storage container is the state that is required to ensure adequate protection of the fuel storage container, e.g., the liner of the fuel storage container, and to permit the refueling process to be performed at a desired rate, without interruptions. The target state of the fuel storage container for refilling the fuel storage container with the hydrogen fuel may be defined by at least the target temperature inside the fuel storage container at the future time point.

The fuel storage container may be required to be refilled at a certain speed and/or within a certain time period. For example, to perform the assigned mission, the vehicle may be expected to remain at the refueling station for refilling for a certain period of time but not longer, so that the vehicle may resume driving, e.g., performing a mission. Also, other vehicles may be refueled with desired or required timing. Thus, interruptions of the refueling process, which may otherwise occur due to overheating of the fuel storage container, may be prevented when the method in accordance with examples of the present disclosure is used. Also, the reduction of the temperature inside the fuel storage container protects the integrity of the fuel storage container, such that the fuel storage container is adequately sealed and no leaks of the hydrogen gas occur.

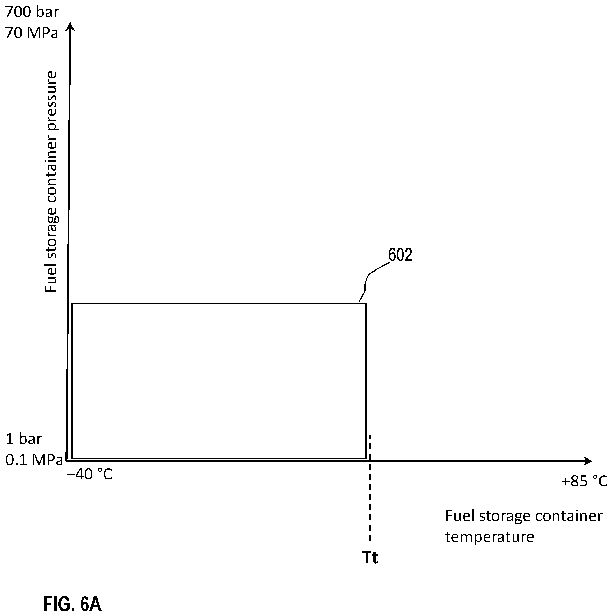

**FIG. 6A** illustrates an example of ranges for possible, such as at any time point, temperature and pressure values inside the fuel storage container. As shown in FIG. 6A, the range of temperature values may be from -40 °C to 85 °C, and the range of pressure values may be from 1 bar (0.1 MPa, megapascal) to 700 bar (700 MPa). An area 602 in FIG. 6A indicates an area indicating a target temperature range and a target pressure range inside the fuel storage container when the vehicle reaches the refueling station. A dotted vertical line Tt indicates a target threshold temperature value inside the fuel storage container, such that it may be required to have the target temperature inside the fuel storage container at the future time point below this target threshold temperature value. In some examples, the target threshold temperature value may be 21 °C, though other values may be used. Thus, in an example, the target temperature inside the fuel storage container may comprise a range of from -40 °C to 20 °C. Other ranges may be used as well, e.g., from -40 °C to 15 °C, or from -40 °C to 10 °C, or from -40 °C to 5 °C, or from -40 °C to 0 °C. As shown schematically in FIG. 6A, in an example, the target pressure inside the fuel storage container may comprise a range of from 1 bar to 150 bar. In some examples, the target pressure inside the fuel storage container may comprise a range of from 1 bar to 200 bar. It should be appreciated that all examples of specific values shown herein are non-limiting.

Referring back to FIG. 5, at decision **block 512**, the control system may determine, using the predicted state and the target state, whether the fuel storage container will reach the target state when the vehicle is operated under the at least one current and/or predicted operating condition. Thus, the control system may determine whether, given the current state of the fuel storage container and the current and/or predicted operating conditions of the vehicle, the fuel storage container may assume or reach the target state at the future time point. In other words, it may be determined whether at least the temperature inside the fuel storage container is predicted to become, at the future time point, low enough so that the fuel storage container may be considered to be at the target state. The target state of the fuel storage container may also comprise the pressure inside the fuel storage container that is desired and/or required for refilling the fuel storage container in the improved manner, as provided by the techniques described herein.

As one example, if a current temperature inside the fuel storage container is above a certain threshold value, e.g., 70 °C, the control system may determine whether, by the time the vehicle has arrived to the refueling station and is ready to be refueled, the fuel storage container will reach the target state at which the temperature inside the fuel storage container may be the target temperature such as, e.g., 20 °C or lower e.g., 10 °C or lower, or 0 °C or lower. In some examples, the target temperature for the interior of the fuel storage container may be between -40 °C and 0 °C. The values of the target temperature inside the fuel storage container, non-limiting examples of which are shown in FIG. 6A, may vary depending on various factors such as, e.g., actual and/or predicted ambient temperature of the environment around the vehicle, the current temperature and the pressure inside the fuel storage container, a current amount of the hydrogen gas in the fuel storage container, cooling performance of the vehicle 10 and its cooling system 25, and other factors.

In some examples herein, the control system 40 may control the cooling system 25 so that the fuel storage container 30 is cooled as much as possible, given power capabilities of the vehicle including of the pump 33, and given the needs to cool the driver's compartment. Thus, there may be no lower limit set for the target temperature of the interior of the fuel storage container. At the same time, the cooling system and the power system of the vehicle that supplies power to the cooling system may have limitations, so that the fuel storage container is proactively cooled to a certain degree, e.g., from 10 to 20 degrees lower than its current temperature. In some implementations, the cooling system 25 can control the fuel storage container 30 so that the temperature inside the fuel storage container 30 is below 0 °C. In some implementations, the cooling system 25 can control the fuel storage container 30 so that the temperature inside the fuel storage container 30 is as low as -40 °C.

At **block 514,** responsive to determining, using the predicted state and the target state, that the fuel storage container will not reach the target state when the power system is operated under the at least one current and/or predicted operating condition, the control system may operate at least portions of the vehicle 10 at at least one modified operating condition such that the fuel storage container assumes the target state at or in advance of the future time point. The at least one modified operating condition may be an operating condition that is adjusted or modified to precondition e.g. precool the fuel storage container in anticipation of refueling or refiling the fuel storage container. Thus, an active cooling of the fuel storage container may be activated by the control system 40 or based on instructions received from the control system 40.

In some examples, the modified operating condition may comprise a cooling power required by the cooling system for the refueling temperature control. For example, increased cooling power may be directed to drive the operation of the cooling system, such as the pump circulating the coolant through the cooling circuit of the cooling system.

In some examples, the operation of the power system of the vehicle 10 may be adjusted or modified. The at least one modified operating condition may additionally include conditions of other components of the vehicle.

In some examples, operating at least portions of the vehicle 10 at the at least one modified operating condition comprises initiating a refueling temperature control process in advance of the future time point, the refueling temperature control process comprising operating at least the cooling system 25 for cooling the fuel storage container 30. The refueling temperature control process may be initiated and performed at least until the future time point. The refueling temperature control process in accordance with examples of the present disclosure is performed to reduce the temperature in the interior 31 of the fuel storage container 30 in order to precondition the fuel storage container 30 for the upcoming hydrogen gas refilling process. For example, with reference to FIG. 3, the pump 33 may be controlled to operate at an increased power and the fuel storage container cooling valve 52 of the cooling circuit 26 of the cooling system 25 may be controlled to direct a portion of the flow of the coolant to the fuel storage container 30. The flow of the coolant may normally be used by the vehicle's air conditioning system to cool the cabin or driver compartment of the vehicle, and the portion of the coolant may be diverted to cool the fuel storage container 30 as part of the refueling temperature control process. It should be noted that this may occur at the expense of directing less coolant for cooling the interior of the cabin, but this effect is considered compensated by the benefits for the refueling process.

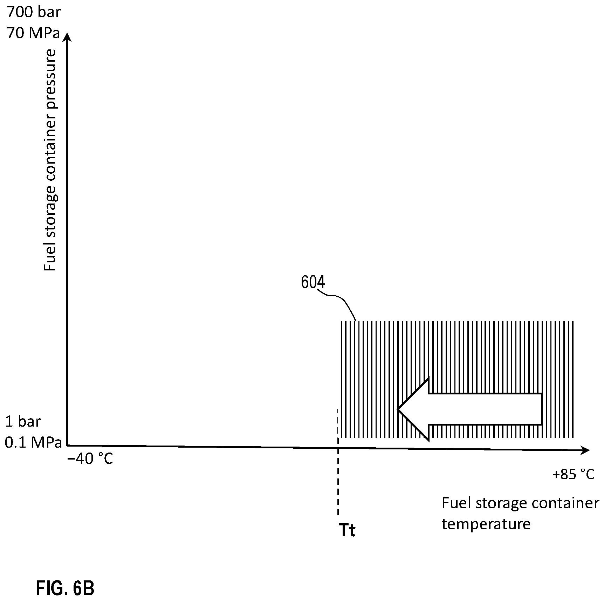

**FIG. 6B** illustrates an example of a range of temperature and pressure values inside the fuel storage container at which at least portions of the hydrogen-fueled vehicle may be instructed to operate at at least one modified operating condition such that the fuel storage container assumes a target state at or in advance of the future time point such as the arrival of the vehicle to the refueling station. Instructing the vehicle to operate at the at least one modified operating condition may comprise instructing the vehicle, e.g., the cooling system of the vehicle, to activate an active cooling of the fuel storage container prior to arrival of the vehicle to the refueling station.

FIG. 6B illustrates an example of values of the current temperature and pressure inside the fuel storage container at which the active cooling of the fuel storage container may be activated prior to arrival of the vehicle comprising the fuel storage container to the refueling station. The ranges of possible temperature and pressure values inside the fuel storage container are shown to be the same as or similar to those in FIG. 6A. A dotted vertical line **Tt** indicates a target threshold temperature value inside the fuel storage container, such that the target temperature inside the fuel storage container may be required to be below the target threshold temperature value. A striped area marked with the numerical reference 604 indicates schematically a range of temperature and pressure values at which the active cooling of the fuel storage container may be activated prior to arrival of the vehicle to the refueling station. Thus, in an example, the active cooling of the fuel storage container may be activated when the temperature inside the fuel storage container is above 21 °C. Other values may be used as well, e.g., the active cooling of the fuel storage container may be activated or triggered when the temperature inside the fuel storage container is at or above 30 °C, or above 40 °C, or above 50 °C.

In some examples, the active cooling of the fuel storage container may be activated or triggered when the temperature inside the fuel storage container is 30 °C.

The refueling temperature control process is initiated before the vehicle arrives to the refueling station, in order to cause the fuel storage container to assume the target state at the future time point at which the vehicle is expected to be positioned at the refueling station for the start of the refueling process. The refueling temperature control process may comprise controlling the temperature inside the fuel storage container in advance of the future time point i.e. before the refueling process. The refueling temperature control process may continue during the refueling process.

Referring back to FIG. 5, at **block 515,** the control system 40 of the vehicle 10 may communicate with the refueling station 50, by sending information to the refueling station 50 and receiving information from the refueling station 50. The control system 40 may be configured to inform the refueling station about the refueling temperature control process. The control system 40 may thus send information to the refueling station informing the refueling station about the precooling of the fuel storage container at the vehicle. The information may comprise information about the target state of the fuel storage container that is expected to be achieved due to the refueling temperature control process. The refueling station may use this information to adjust the refueling process for the vehicle once the refueling process begins.

The control system may send to the refueling station other suitable information and/parameters, e.g., the current temperature inside the fuel storage container, the current pressure inside the fuel storage container, the distance of the vehicle to the refueling station, the rate of usage of the hydrogen fuel by the vehicle before the vehicle reaches the refueling station, cooling performance of the cooling system regarding cooling the fuel storage container, and other information. The refueling station may adjust one or more of parameters for refueling the vehicle 10. For example, a temperature of the hydrogen gas to be supplied from the refueling station may be allowed to be higher than in cases when the refueling temperature control process is not performed, because the risk of overheating is mitigated.

In hydrogen refueling stations, the hydrogen gas may be stored in a compressed form and it may be cooled to approximately -40 °C to prevent overheating in a fuel storage container or tank of a vehicle during refueling time. In some refueling stations, the hydrogen gas may be stored at temperatures of approximately -20 °C, but a longer refueling time may be required at those stations. The method in accordance with the present disclosure allows reducing the refueling time even when the hydrogen gas is stored at a refueling station at increased temperatures, such as e.g., at temperatures in a range of from -26 °C to -17.5 °C.

A known issue associated with a hydrogen refueling is generation of heat during the refueling of a tank of the vehicle. During the refueling process, the temperature of the hydrogen gas being supplied to the vehicle's tank increases due to pressure loss as the gas is supplied to the vehicle's tank, and due to external heat transfer from e.g. a hose of the refueling station and refueling components of the vehicle. Accordingly, precooling the fuel storage container in the vehicle alleviates the potential risk of overheating of the hydrogen gas and the fuel storage container refilled with this gas.

The fuel storage container and the refueling station may communicate before and during the refueling process. In some examples, the method 500 may comprise obtaining at least one of the one or more refueling parameters from the refueling station and/or providing to the refueling station information on at least the target state of the fuel storage container for refilling the fuel storage container with the hydrogen fuel.

It should be appreciated that the processing at blocks 514 and 515 is shown at respective separate steps for illustration purposes only, as the control system 40 may control the vehicle to perform the refueling temperature control process and may inform the refueling station about the refueling temperature control process at the vehicle simultaneously or with a certain overlap in time. In some cases, the control system 40 may update the refueling station of a current state of the fuel storage container 30 as the vehicle 10 is traveling to the refueling station. Furthermore, the control system 40 may inform the refueling station about the refueling temperature control process during the refueling process.

At **block 516,** the control system may control the vehicle to receive the hydrogen gas during the refueling process at the refueling station. At this point in time, which has been referred to herein as the future point in time, due to preparation of the fuel storage container in advance of this point, the vehicle is stopped at the refueling station and is positioned for refilling the fuel storage container with hydrogen fuel or gas from the refueling station. One or more signals may be received from the refueling station indicating the beginning of the refueling process. Because of the refueling temperature control process performed onboard the vehicle, the refueling process may be performed without interruptions which otherwise typically occur due to overheating of the supplied hydrogen gas and resulting overheating of the vehicle tank. The overheating may occur due to unique properties of hydrogen to heat up when its pressure decreases. Thus, a pressure difference between a pressure of the hydrogen gas at the refueling station and a pressure inside the fuel storage container causes an increase in the temperature of the hydrogen gas as it enters the fuel storage container in the vehicle. This increase is detected by the refueling station, and the refueling process may be aborted or interrupted at the refueling station, until the temperature of the hydrogen gas decreases to a certain safer level, e.g., to below 85 °C in some cases.

The refueling temperature control process, initiated prior to the future time point such as prior to arrival of the vehicle to the refueling station, may continue during the refueling process at the refueling station, i.e. beyond the future time point.

Accordingly, in some examples, the refueling temperature control process may comprise operating at least the portions of the vehicle at the at least one modified operating condition such that the fuel storage container maintains the target state of the fuel storage container beyond the future time point.

One or more parameters of the refueling temperature control process performed during the refueling process at the refueling station, beyond the future time point, may differ from one or more parameters of the refueling temperature control process performed prior to the future time point - before the vehicle arrives to the refueling station. In some examples, the refueling temperature control process may be performed such that the temperature inside the fuel storage container may be permitted to be higher than for the refueling temperature control process performed prior to the future time point. When the vehicle is driving or driven, a discharge of hydrogen gas from the fuel storage container may result in automatic reduction of the temperature inside the fuel storage container, such that the temperature inside the fuel storage container may be sufficiently low even without the active cooling. However, because the overheating of the hydrogen gas during the refueling typically occurs, the refueling temperature control process is initiated in advance to prepare the fuel storage container in advance, for an inevitable increase of the temperature of the hydrogen gas.

Before the refueling process begins, the cooling system of the vehicle may be controlled, as part of the refueling temperature control process, to precool or cool the fuel storage container to low temperature values, e.g., to temperatures as low as 0 °C or below, e.g., to below -20 °C, or below -40 °C in some cases. During the refueling process, the cooling system of the vehicle may be controlled, as part of the continued refueling temperature control process, to continue cooling the fuel storage container to temperatures that may be higher than those to which the fuel storage container was precooled before the refueling process began. As discussed below, the refueling temperature control process may also be performed post-refueling, after the vehicle leaves the refueling station, in which case the temperature inside the fuel storage container may be brought to sufficiently low values quickly enough to mitigate the temperature increase during the refueling.

In some examples, the method 500 may comprise enabling the vehicle to receive the hydrogen fuel from the refueling station at a hydrogen fuel temperature that is above a threshold hydrogen fuel temperature. The temperature of the hydrogen fuel may be measured at the refueling station. The threshold hydrogen fuel temperature may be a temperature above which the refueling process may otherwise, i.e. in cases in which the refueling temperature control process is not performed, be stopped or aborted. For example, the threshold hydrogen fuel temperature may be 70 °C. As another example, the threshold hydrogen fuel temperature may be 75 °C. In some examples, the threshold hydrogen fuel temperature may be 71 °C or 72 °C or 73 °C or 74 °C. The threshold hydrogen fuel temperature may have other values. In some examples, the temperature of the hydrogen fuel supplied to the vehicle from the refueling station may not exceed 85 °C.

At **block 517,** the control system 40 of the vehicle 10 may communicate with the refueling station 50, by sending information to the refueling station 50 and receiving information from the refueling station 50. The control system 40 may be configured to inform the refueling station about the refueling temperature control process. The processing at block 517 is similar to the processing at block 515 and may be part of the same processing as indicated schematically by a dashed box around the blocks 515, 517. The refueling temperature control process may proceed during the refueling process, and the control system 40 may continue informing the refueling station about the refueling temperature control process, such as about the refueling parameters comprising a current temperature and pressure in the fuel storage container related to a state of the fuel storage container 30. Furthermore, the vehicle 10 may also communicate with the refueling station after the refueling process is completed.

The control system 40 may provide, to the refueling station, information about the actual current temperature inside the fuel storage container. In some examples, the information about the current temperature inside the fuel storage container may be intentionally false e.g. offset from the current temperature inside the fuel storage container. In particular, in some examples, the information about the actual current temperature inside the fuel storage container may be adjusted or overwritten such that the control system 40 informs the refueling station about not the actual temperature inside the fuel storage container but about the adjusted interior temperature that is a reduced temperature, i.e. a lower temperature than the actual temperature inside the fuel storage container. Such intentionally false, adjusted interior temperature may be lower than the actual temperature inside the fuel storage container by a value that depends, e.g., on the cooling power of the cooling system. As one non-limiting example, the adjusted interior temperature may be lower than the actual temperature inside the fuel storage container by 15 degrees. In some examples, the adjusted interior temperature may be lower than the actual temperature inside the fuel storage container by a degree in a range of from 10 degrees to 30 degrees. Other values may be used additionally or alternatively.

The intentionally false information indicating the temperature inside the fuel storage container may be sent to the refueling station during a time when the vehicle and the refueling station communicate, such as before and during the refueling process. This may be done to allow the refueling station to refill the fuel storage container with the hydrogen gas having an increased temperature and thus at a faster rate or speed. In this way, the refueling station may adjust the rate or speed of supplying the hydrogen fuel to the vehicle to be higher, as if the current temperature inside the fuel storage container is lower than it actually is. This is possible because the refueling temperature control process will ensure that the fuel storage container is sufficiently cooled down, which may be performed even after the refueling has been completed. The refueling temperature control process in accordance with examples herein may be used to control the temperature inside the fuel storage container at any point during operation of the vehicle, such that a finer control is possible and benefits are achieved both to the vehicle and to operation of the refueling station which may be able to service more vehicles due to faster refueling.

At **block 518,** the control system 40 may determine whether the refueling process has been completed. The vehicle may detect that the refueling process has been completed. Also, one or more signals may be received from the refueling station indicating the end of the refueling process. Responsive to determining that the refueling process has been completed, the process 500 may proceed to block 520 as shown in FIG. 5.

At **block 520,** the refueling temperature control process may optionally continue after the refueling process. As discussed above, the vehicle may be enabled to receive the hydrogen fuel from the refueling station at a hydrogen fuel temperature that is above the threshold hydrogen fuel temperature. In some examples, operating at least portions of the vehicle at the at least one modified operating condition may comprise continuing the refueling temperature control process after the fuel storage container has been refilled with the hydrogen fuel, to account for the hydrogen fuel received at the hydrogen fuel temperature that is above the threshold hydrogen fuel temperature.

Although the refueling process is completed, and the vehicle may or may not be moving at this time, the refueling temperature control process may continue to further reduce the temperature inside the fuel storage container. For example, it may be required to reduce the temperature inside the fuel storage container to a certain post-refueling target temperature value, e.g. due to the fuel storage container having received from the refueling station the hydrogen gas of a higher temperature than required to meet safety standards for the fuel storage container. In some examples, the post-refueling target temperature value may be higher than the target temperature inside the fuel storage container at the future time point. The refueling temperature control process may continue post-refueling for a certain period of time, e.g., until the temperature inside the fuel storage container is reduced to or below the post-refueling target temperature value.

The vehicle 10 may communicate with the refueling station after the refueling process is completed. In some examples, after the refueling process is completed, the vehicle 10 stops communicating with the refueling station.

Responsive to determining that the refueling process has not been completed, the process 500 may return to block 516, as shown in FIG. 5, where the fuel storage container continues to be refilled during the refueling process.

At **block 522,** the refueling temperature control process may be completed, and the process 500 may end. Suitable one or more components of the vehicle 10 may be controlled to stop the refueling temperature control process. For example, the control system 40 may control the fuel storage container cooling valve 52 to cease the supply of the coolant towards the fuel storage container 30. In some examples, the communication between the vehicle and the refueling station may be terminated, which however may be performed at any suitable point in time. In some examples, the vehicle may maintain a wireless connection with the refueling station at any suitable point in time.

It should be appreciated that the method or process 500 may be executed continuously as the vehicle is operating, such that the control system 40 monitors an amount of the hydrogen gas in the fuel storage container, a distance of the vehicle to one or more refueling stations, and other parameters. The control system 40 may activate the process 500, comprising the refueling temperature control process, in response to determining that an indication is obtained indicating that the fuel storage container is to be refilled with hydrogen fuel at a refueling station at a future time point.

The method in accordance with examples of the present disclosure may be implemented in any hydrogen-fueled vehicle, such as a truck, a bus, a construction vehicle, an aircraft, a marine vessel, etc. To perform the method steps described herein, the control system such as control system 40 may be configured to perform the processing described in connection with FIG. 5 and/or any other examples in accordance with aspects of the present disclosure.

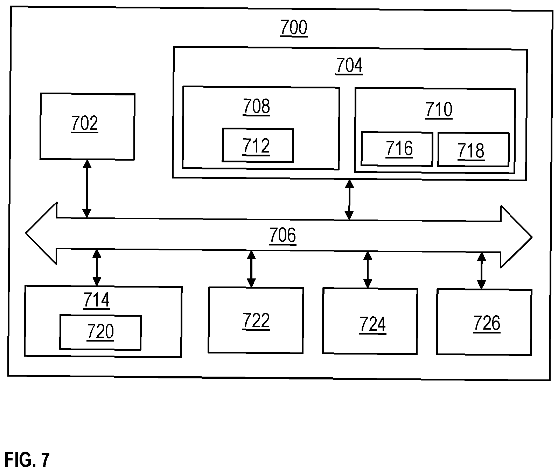

**FIG. 7** is a schematic diagram of a computer system **700** for implementing examples disclosed herein. In some examples, the control system 40 may be implemented as the computer system 700. The computer system **700** is adapted to execute instructions from a computer-readable medium to perform these and/or any of the functions or processing described herein. The computer system **700** may be connected (e.g., networked) to other machines in a LAN, an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, the control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit, or to another display. The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a list of Examples. The below Examples may be combined with any of the examples above, or with the subject matter of the attached claims, in any suitable manner.

### Examples

Example 1. A hydrogen-fueled vehicle (10) comprising:
a power system (20);
a fuel storage container (30) that is configured to store hydrogen fuel to be supplied to the power system;
a cooling system (25) configured to cool at least the fuel storage container; and
a control system (40) comprising a processing circuitry (42) that is configured to:
   obtain an indication indicating that the fuel storage container is to be refilled with hydrogen fuel at a refueling station at a future time point;
   determine a predicted state of the fuel storage container at the future time point using at least one current and/or predicted operating condition of the vehicle, the predicted state comprising at least a predicted temperature inside the fuel storage container at the future time point;
   determine a target state of the fuel storage container for refilling the fuel storage container with the hydrogen fuel, the target state comprising at least a target temperature inside the fuel storage container at the future time point; and
   responsive to determining, using the predicted state and the target state, that the fuel storage container will not reach the target state when the vehicle is operated under the at least one current and/or predicted operating condition, instruct at least portions of the vehicle to operate at at least one modified operating condition such that the fuel storage container assumes the target state at or in advance of the future time point.

Example 2. The hydrogen-fueled vehicle of Example 1, wherein instructing the at least portions of the vehicle to operate at the at least one modified operating condition comprises initiating a refueling temperature control process in advance of the future time point, the refueling temperature control process comprising instructing at least the cooling system to cool the fuel storage container.

Example 3. The hydrogen-fueled vehicle of Example 1 or Example 2, wherein the predicted state of the fuel storage container is determined based on one or more of a current temperature inside the fuel storage container, a current pressure inside the fuel storage container, a distance to the refueling station, and a rate of usage of the hydrogen fuel by the vehicle before the vehicle reaches the refueling station.

Example 4. The hydrogen-fueled vehicle of any one of Examples 1 to 3, wherein the target state of the fuel storage container at the future time point is determined based on one or more refueling parameters comprising one or more of an amount of the hydrogen fuel to be received by the fuel storage container at the refueling station, a target rate of receiving the hydrogen fuel by the fuel storage container at the refueling station, and a temperature of the hydrogen fuel at the refueling station.

Example 5. The hydrogen-fueled vehicle of Example 4, wherein the processing circuitry is configured to obtain at least one of the one or more refueling parameters from the refueling station and/or to provide to the refueling station information on at least the target state of the fuel storage container for refilling the fuel storage container with the hydrogen fuel.

Example 6. The hydrogen-fueled vehicle of any one of Examples 2 to 5, wherein the refueling temperature control process comprises operating at least the portions of the vehicle at the at least one modified operating condition such that the fuel storage container maintains the target state beyond the future time point.

Example 7. The hydrogen-fueled vehicle of any one of Examples 2 to 6, wherein the one modified operating condition comprises a cooling power required by the cooling system for the refueling temperature control.

Example 8. The hydrogen-fueled vehicle of any one of Examples 2 to 7, wherein the processing circuitry is configured to inform the refueling station about the refueling temperature control process.

Example 9. The hydrogen-fueled vehicle of any one of Examples 2 to 8, wherein the processing circuitry is configured to enable the vehicle to receive the hydrogen fuel from the refueling station at a hydrogen fuel temperature that is above a threshold hydrogen fuel temperature.

Example 10. A method (500) for controlling a hydrogen-fueled vehicle (10), the vehicle comprising a power system, a fuel storage container and a cooling system, wherein the cooling system is configured to cool at least the fuel storage container, the fuel storage container being configured to store hydrogen fuel to be supplied to the power system, the method comprising:
obtaining (504) an indication indicating that the fuel storage container is to be refilled with hydrogen fuel at a refueling station at a future time point;
determining (508) a predicted state of the fuel storage container at the future time point using at least one current and/or predicted operating condition of the vehicle, the predicted state comprising at least a predicted temperature inside the fuel storage container at the future time point;
determining (510) a target state of the fuel storage container for refilling the fuel storage container with the hydrogen fuel, the target state comprising at least a target temperature inside the fuel storage container at the future time point; and
responsive to determining, using the predicted state and the target state, that the fuel storage container will not reach the target state when the vehicle is operated under the at least one current and/or predicted operating condition, operating (514) at least portions of the vehicle at at least one modified operating condition such that the fuel storage container assumes the target state at or in advance of the future time point.

Example 11. The method of Example 10, wherein operating at least portions of the vehicle at the at least one modified operating condition comprises initiating a refueling temperature control process in advance of the future time point, the refueling temperature control process comprising operating at least the cooling system for cooling the fuel storage container.

Example 12. The method of Example 10 or Example 11, wherein the predicted state of the fuel storage container is determined based on one or more of a current temperature inside the fuel storage container, a current pressure inside the fuel storage container, a distance to the refueling station, and a rate of usage of the hydrogen fuel by the vehicle before the vehicle reaches the refueling station.

Example 13. The method of any one of Examples 10 to 12, wherein the target state of the fuel storage container at the future time point is determined based on one or more refueling parameters comprising one or more of an amount of the hydrogen fuel to be received by the fuel storage container at the refueling station, a target rate of receiving the hydrogen fuel by the fuel storage container at the refueling station, and a temperature of the hydrogen fuel at the refueling station.

Example 14. The method of Example 13, comprising obtaining (515, 517) at least one of the one or more refueling parameters from the refueling station and/or providing to the refueling station information on at least the target state of the fuel storage container for refilling the fuel storage container with the hydrogen fuel.

Example 15. The method of any one of Examples 11 to 14, wherein the refueling temperature control process comprises operating at least the portions of the vehicle at the at least one modified operating condition such that the fuel storage container maintains the target state beyond the future point.

Example 16. The method of Example 15, comprising enabling the vehicle to receive the hydrogen fuel from the refueling station at a hydrogen fuel temperature that is above a threshold hydrogen fuel temperature.

Example 17. The method of Example 16, wherein operating at least portions of the vehicle at the at least one modified operating condition comprises continuing (520) the refueling temperature control process after the fuel storage container has been refilled with the hydrogen fuel, to account for the hydrogen fuel received at the hydrogen fuel temperature that is above the threshold hydrogen fuel temperature.

Example 18. A control system (40) comprising processing circuitry (42) configured to perform the method of any one of Examples 10 to 17.

Example 19. A computer program product comprising computer-executable instructions, which, when executed by processing circuitry, cause the processing circuitry to perform the method of any one of Examples 10 to 17.

Example 20. A tangible non-transitory computer-readable storage medium having stored thereon computer-executable instructions, which, when executed by processing circuitry, cause the processing circuitry to perform the method of any one of Examples 10 to 17.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A hydrogen-fueled vehicle (10) comprising:
a power system (20);
a fuel storage container (30) that is configured to store hydrogen fuel to be supplied to the power system;
a cooling system (25) configured to cool at least the fuel storage container; and
a control system (40) comprising a processing circuitry (42) that is configured to:
obtain an indication indicating that the fuel storage container is to be refilled with hydrogen fuel at a refueling station at a future time point;
determine a predicted state of the fuel storage container at the future time point using at least one current and/or predicted operating condition of the vehicle, the predicted state comprising at least a predicted temperature inside the fuel storage container at the future time point;
determine a target state of the fuel storage container for refilling the fuel storage container with the hydrogen fuel, the target state comprising at least a target temperature inside the fuel storage container at the future time point; and
responsive to determining, using the predicted state and the target state, that the fuel storage container will not reach the target state when the vehicle is operated under the at least one current and/or predicted operating condition, instruct at least portions of the vehicle to operate at at least one modified operating condition such that the fuel storage container assumes the target state at or in advance of the future time point.

2. The hydrogen-fueled vehicle of claim 1, wherein instructing the at least portions of the vehicle to operate at the at least one modified operating condition comprises initiating a refueling temperature control process in advance of the future time point, the refueling temperature control process comprising instructing at least the cooling system to cool the fuel storage container.

3. The hydrogen-fueled vehicle of claim 1 or claim 2, wherein the predicted state of the fuel storage container is determined based on one or more of a current temperature inside the fuel storage container, a current pressure inside the fuel storage container, a distance to the refueling station, and a rate of usage of the hydrogen fuel by the vehicle before the vehicle reaches the refueling station.

4. The hydrogen-fueled vehicle of any one of claims 1 to 3, wherein the target state of the fuel storage container at the future time point is determined based on one or more refueling parameters comprising one or more of an amount of the hydrogen fuel to be received by the fuel storage container at the refueling station, a target rate of receiving the hydrogen fuel by the fuel storage container at the refueling station, and a temperature of the hydrogen fuel at the refueling station.

5. The hydrogen-fueled vehicle of claim 4, wherein the processing circuitry is configured to obtain at least one of the one or more refueling parameters from the refueling station and/or to provide to the refueling station information on at least the target state of the fuel storage container for refilling the fuel storage container with the hydrogen fuel.

6. The hydrogen-fueled vehicle of any one of claims 2 to 5, wherein the refueling temperature control process comprises operating at least the portions of the vehicle at the at least one modified operating condition such that the fuel storage container maintains the target state beyond the future time point.

7. The hydrogen-fueled vehicle of any one of claims 2 to 6, wherein the processing circuitry is configured to enable the vehicle to receive the hydrogen fuel from the refueling station at a hydrogen fuel temperature that is above a threshold hydrogen fuel temperature.

8. A method (500) for controlling a hydrogen-fueled vehicle (10), the vehicle comprising a power system, a fuel storage container and a cooling system, wherein the cooling system is configured to cool at least the fuel storage container, the fuel storage container being configured to store hydrogen fuel to be supplied to the power system, the method comprising:
obtaining (504) an indication indicating that the fuel storage container is to be refilled with hydrogen fuel at a refueling station at a future time point;
determining (508) a predicted state of the fuel storage container at the future time point using at least one current and/or predicted operating condition of the vehicle, the predicted state comprising at least a predicted temperature inside the fuel storage container at the future time point;
determining (510) a target state of the fuel storage container for refilling the fuel storage container with the hydrogen fuel, the target state comprising at least a target temperature inside the fuel storage container at the future time point; and
responsive to determining, using the predicted state and the target state, that the fuel storage container will not reach the target state when the vehicle is operated under the at least one current and/or predicted operating condition, operating (514) at least portions of the vehicle at at least one modified operating condition such that the fuel storage container assumes the target state at or in advance of the future time point.

9. The method of claim 8, wherein operating at least portions of the vehicle at the at least one modified operating condition comprises initiating a refueling temperature control process in advance of the future time point, the refueling temperature control process comprising operating at least the cooling system for cooling the fuel storage container.

10. The method of claim 8 or claim 9, wherein the predicted state of the fuel storage container is determined based on one or more of a current temperature inside the fuel storage container, a current pressure inside the fuel storage container, a distance to the refueling station, and a rate of usage of the hydrogen fuel by the vehicle before the vehicle reaches the refueling station.

11. The method of any one of claims 8 to 10, wherein the target state of the fuel storage container at the future time point is determined based on one or more refueling parameters comprising one or more of an amount of the hydrogen fuel to be received by the fuel storage container at the refueling station, a target rate of receiving the hydrogen fuel by the fuel storage container at the refueling station, and a temperature of the hydrogen fuel at the refueling station.

12. The method of claim 11, comprising obtaining (515, 517) at least one of the one or more refueling parameters from the refueling station and/or providing to the refueling station information on at least the target state of the fuel storage container for refilling the fuel storage container with the hydrogen fuel.

13. The method of any one of claims 8 to 12, wherein the refueling temperature control process comprises operating at least the portions of the vehicle at the at least one modified operating condition such that the fuel storage container maintains the target state beyond the future point.

14. The method of any one of claims 8 to 13, comprising enabling the vehicle to receive the hydrogen fuel from the refueling station at a hydrogen fuel temperature that is above a threshold hydrogen fuel temperature;

15. The method of claim 14, wherein operating at least portions of the vehicle at the at least one modified operating condition comprises continuing (520) the refueling temperature control process after the fuel storage container has been refilled with the hydrogen fuel, to account for the hydrogen fuel received at the hydrogen fuel temperature that is above the threshold hydrogen fuel temperature.
